# EUROPÄISCHE PATENTSCHRIFT

(11) **EP 3 729 219 B1**
(45) Veröffentlichungstag und Bekanntmachung des Hinweises auf die Patenterteilung: **02.08.2023**
(21) Anmeldenummer: 18803964.8
(22) Anmeldetag: 15.11.2018
(51) Int. Cl.: G05B 23/02, G05B 19/042

(54) **VERFAHREN ZUM ÜBERWACHEN EINER MESSSTELLE IN EINER ANLAGE DER PROZESSAUTOMATISIERUNG**
METHOD FOR MONITORING A MEASURING POINT IN A PROCESS AUTOMATION SYSTEM
PROCÉDÉ DE SURVEILLANCE D'UNE STATION DE MESURE DANS UNE INSTALLATION D'AUTOMATISATION DE PROCESSUS

(30) Priorität: 22.12.2017 DE 102017131087
(43) Veröffentlichungstag der Anmeldung: 28.10.2020
(73) Patentinhaber: Endress+Hauser Process Solutions AG, 4153 Reinach (CH)
(72) Erfinder: ENGEL, Bastian, 79639 Grenzach (DE); SCHMIDT, Thomas, 4058 Basel (CH); BACHMANN, Viktor, 79379 Müllheim (DE); STACKE, Ingolf, 4143 Dornach (CH)
(74) Vertreter: Trenkle, Dennis
(86) Internationale Anmeldenummer: PCT/EP2018/081335
(87) Internationale Veröffentlichungsnummer: WO 2019/120784

(56) Entgegenhaltungen:
- EP-A1- 0 895 197
- EP-A2- 1 189 126
- EP-A2- 2 585 716
- DE-A1-102004 032 966
- DE-A1-102006 051 102

## Beschreibung

Die Erfindung betrifft ein Verfahren zum Überwachen einer Messstelle in einer Anlage der Automatisierungstechnik, wobei die Messstelle zumindest an einer Anlagenkomponente, insbesondere ein Behälter und/oder eine Rohrleitung, in welcher sich ein Prozessmedium zumindest zeitweise befindet, angebracht ist, welche Anlagenkomponente in einen verfahrenstechnischen Prozess eingebunden ist.

Aus dem Stand der Technik sind bereits Feldgeräte bekannt geworden, die in industriellen Anlagen zum Einsatz kommen. In der Automatisierungstechnik ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Sensorsysteme. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktorsysteme verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben. EP 189 126 A2 offenbart, dass ein Modell einer Anlage anhand von Prozessgrößen in einer Lernphase erstellt wird. Dieses Modell definiert eine Überwachungsgröße, deren zeitlicher Verlauf beobachtet wird. Ein solches Modell wird für die komplette Anlage oder jeweils für einen Teilbereich der Anlage erstellt.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Bei den übergeordneten Einheiten handelt es sich um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an die Leitstelle der Anlage weiterleiten. Die Leitstelle dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Im Zuge der Industrie 4.0, bzw. IIoT ("Industrial Internet of Things") werden die von den Feldgeräten erzeugten Daten auch häufig direkt aus dem Feld mithilfe sogenannter Datenumsetzungseinheiten, welche beispielsweise als "Edge Devices" oder "Cloud Gateways" bezeichnet werden, erhoben und automatisiert an eine zentrale cloudfähige Serviceplattform übermittelt, auf welcher sich eine Applikation befindet. Auf diese Applikation, welche unter anderem Funktionen zur Visualisierung und weiteren Bearbeitung der auf der Datenbank gespeicherten Daten bietet, kann von einem Benutzer mittels Internet zugegriffen werden.

Mittels dieser Methoden ist nahezu ausschließlich die Überwachung der elektronischen Komponenten der Anlage - also der Feldgeräte und Steuerungseinheiten - möglich. Bei diesen Methoden bleiben allerdings die Betrachtung, bzw. der Einfluss rein mechanischer Komponenten, beispielsweise Rohrverbindungen, außen vor.

Ausgehend von dieser Problematik liegt der Erfindung die Aufgabe zugrunde, ein Verfahren vorzustellen, welche es erlaubt, einen Wartungsbedarf von rein mechanischen Komponenten in einer Anlage der Automatisierungstechnik festzustellen.

Die Aufgabe wird durch ein Verfahren zum Überwachen einer Messstelle in einer Anlage der

Automatisierungstechnik gemäß Anspruch 1 gelöst, wobei die Messstelle an zumindest an einer Anlagenkomponente, insbesondere einem Behälter und/oder einer Rohrleitung, in welcher sich ein Prozessmedium zumindest zeitweise befindet, angebracht ist, welche Anlagenkomponente in einen verfahrenstechnisches Prozess eingebunden ist, wobei die Messstelle zumindest ein Feldgerät, welches zum Erfassen und/oder Beeinflussen von Prozessvariablen des Prozessmediums ausgestaltet ist, und zumindest ein Kommunikationsmittel, welches zum Übertragen der von dem Feldgerät erfassten Prozessvariablen an eine Leitstelle der Anlage ausgestaltet ist, umfasst, und wobei der Prozess auf einen definierten Referenzarbeitspunkt ausgelegt ist, wobei ein Arbeitspunkt das Erzeugen zumindest eines Produkts vorbestimmter Quantität und Qualität aus zumindest einem Edukt vorbestimmter Quantität und Qualität unter Aufwenden einer Energiemenge definiert, umfassend:
- Übertragen der von dem Feldgerät erfassten Prozessvariablen an eine, insbesondere lokale oder webbasierte, Serviceplattform;
- Speichern der Prozessvariablen in der Serviceplattform;
- Berechnen des aktuellen Arbeitspunktes, an welchem der Prozess betrieben wird, auf Grundlage der gespeicherten Prozessvariablen;
- Vergleichen des aktuellen Arbeitspunktes des Prozesses mit dem Referenzarbeitspunkt; und
- Erstellen und Übermitteln einer Wartungsnotifikation an einen Benutzer für den Fall, dass der aktuelle Arbeitspunkt des Prozesses eine Abweichung gegenüber dem Referenzarbeitspunkt aufweist, welche Abweichung größer gleich einem vorbestimmten Wert ist.

Mittels des erfindungsgemäßen Verfahrens ist mittels den gemessenen Prozessvariablen der Wartungsbedarf von Komponenten detektierbar, welche Komponenten verschieden zu den Feldgeräten sind. Hierbei wird ein oder mehrere der Arbeitspunkte des Prozesses überwacht. Wandern diese Betriebspunkte im Laufe der Zeit, zeigen also eine Abweichung zu einem Referenzarbeitspunkt, so kann dadurch auf einen erhöhten Energiebedarf der Messstelle geschlossen werden. Eine zusätzliche Hardwarekomponente in Form von zusätzlicher Sensorik ist zum Durchführen des Verfahrens nicht vonnöten.

Beispielsweise steigt der Wert der Prozessvariable Temperatur für Dampf, welcher eine Rohrleitung durchströmt. Dies bedeutet, dass sich der Arbeitspunkt derart verändert, dass eine höhere Temperatur benötigt ist. Dadurch kann auf einen erhöhten Energiebedarf geschlossen werden, welcher zum Erzeugen des Produkts in vorbestimmter Qualität und Quantität benötigt wird. Die Ursache für den Bedarf des heißeren Dampfes, z.B. Undichtigkeit der Rohrleitung, muss durch Maintenance herausgefunden werden, wofür der Benutzer eine Wartungsnotifikation erhält.

Feldgeräte, welche im Zusammenhang mit dem erfindungsgemäßen Verfahren erwähnt werden, sind bereits im einleitenden Teil der Beschreibung beispielhaft genannt worden.

Gemäß einer vorteilhaften Weiterbildung des erfindungsgemäßen Verfahrens ist vorgesehen, dass der Prozess in Teilbereiche unterteilt wird, wobei jeder der Teilbereiche zumindest eine Anlagekomponente und/oder ein Feldgerät umfasst und wobei für jeden der Teilbereiche der aktuelle Arbeitspunkt, an welchem der jeweilige Teilbereich betrieben wird, berechnet und mit einem Referenzarbeitspunkt verglichen wird. Durch Langzeitbeobachtung all dieser Arbeitspunkte kann durch Veränderung der Arbeitspunkte auf einen veränderten Bedarf an Energie für die jeweiligen Teilbereiche geschlossen werden. Durch die Beobachtung der Arbeitspunkte lässt sich der veränderte Energiebedarf eines Arbeitspunktes ermitteln und dessen Ursache lokalisieren.

Gemäß einer bevorzugten Ausgestaltung des erfindungsgemäßen Verfahrens ist vorgesehen, dass im Falle, dass der aktuelle Arbeitspunkt von einem der Teilbereiche eine Abweichung gegenüber dem jeweiligen Referenzarbeitspunkt aufweist, welche Abweichung größer gleich einen vorbestimmten Wert, ist eine den Teilbereich betreffende Wartungsnotifikation erstellt und übermittelt wird. Der Benutzer wird durch die entsprechende Wartungsnotifikation unmittelbar auf denjenigen Teilbereich hingewiesen, in welchem ein erhöhter Energiebedarf, und somit beispielsweise eine Fehlfunktion einer mechanischen Anlagenkomponente, registriert wird. Gemäß einer ersten Variante des erfindungsgemäßen Verfahrens ist vorgesehen, dass der Referenzarbeitspunkt zu einem früheren Zeitpunkt, insbesondere bei der Inbetriebnahme des Prozesses oder des Teilbereichs, bestimmt wird.

Gemäß der Erfindung ist vorgesehen, dass der Referenzarbeitspunkt ein aktueller Arbeitspunkt eines weiteren Prozesses, bzw. eines weiteren Teilbereichs eines Prozesses darstellt, welcher Referenzarbeitspunkt kontinuierlich aktualisiert wird. Ein systematischer Drift, welcher sich in ähnlichen Prozessen oder Teilbereichen des Prozessen zeigt und nicht unmittelbar von einer Fehlfunktion verursacht wird, führt dadurch nicht zu einer Wartungsnotifikation.

Gemäß einer dritten Variante des erfindungsgemäßen Verfahrens ist vorgesehen, dass der Referenzarbeitspunkt durch einen Mittelwert von Arbeitspunkten von Prozessen gleichen Typs gebildet wird. Ähnlich wie in der zweiten Variante wird hier auf eine Sammlung von Erfahrungen zurückgegriffen.

Gemäß einer vorteilhaften Ausgestaltung des erfindungsgemäßen Verfahrens ist vorgesehen, dass die von dem Feldgerät erfassten Prozessvariablen indirekt über die Leitstelle an die Serviceplattform übermittelt werden, oder wobei die von dem Feldgerät erfassten Prozessvariablen direkt, insbesondere über ein lokales Netzwerk und/oder eine Internetverbindung, von dem Feldgerät an die Serviceplattform übermittelt wird. Typischerweise sind die Feldgeräte mit einem Feldbus als Kommunikationsnetzerk, beispielsweise HART, Foundation Fieldbus oder PROFIBUS, mit der Leistelle in Kommunikationsverbindung. Insbesondere Feldgeräte neueren Typs verfügen über zusätzliche Kommunikationsschnittstellen, mittels welchen die Feldgeräte drahtlose oder drahtgebunden mit wenigstens einem zusätzlichen Kommunikationsnetzwerk, beispielsweise mit dem Internet, verbindbar sind.

In einer bevorzugten Weiterbildung des erfindungsgemäßen Verfahrens ist vorgesehen, dass zum Berechnen des aktuellen Arbeitspunktes des Prozesses, bzw. des Teilbereichs, gespeicherte Prozessvariablen von Feldgeräten, welche in Messstellen enthalten sind, welche sich örtlich in der Nähe der Messstelle befinden, verwendet werden. Hierdurch wird die unmittelbare Umgebung miterfasst und es kann auf weitere Fehlfunktionen, bzw. Auswirkungen der Fehlfunktion auf weitere Anlagenteile, geschlossen werden.

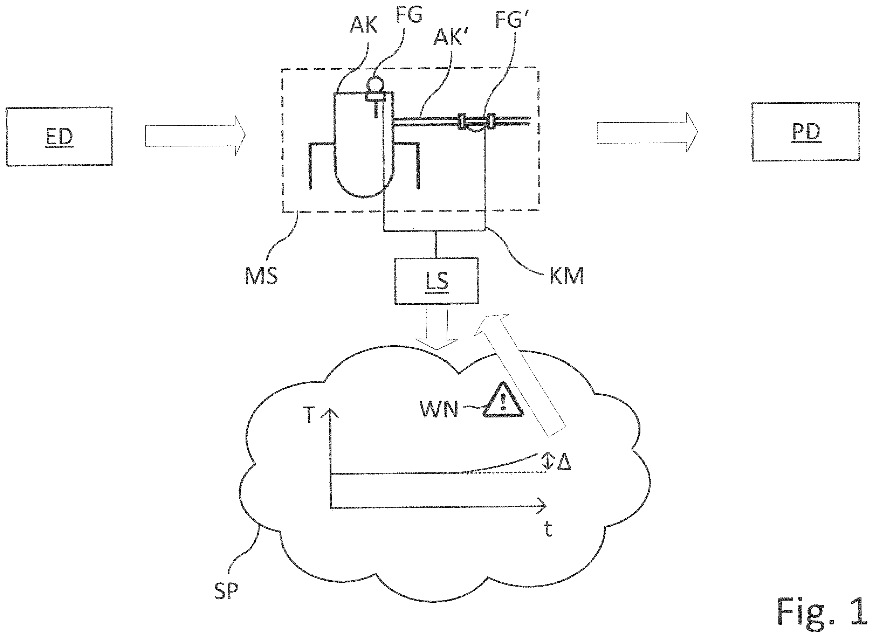

Die Erfindung wird anhand der nachfolgenden Figuren näher erläutert. Es zeigen Fig. 1: ein Ausführungsbeispiel des erfindungsgemäßen Verfahrens.

In Fig. 1 ist eine Messstelle MS einer Anlage der Prozessautomatisierung abgebildet. Die Messstelle MS ist an einem Tank AK einer von dem Tank AK abführenden Rohrleitung AK' angebracht. Zur Messung des Füllstands des Tanks AK ist besteht die Messstelle aus einem Feldgerät FG, beispielsweise einem Füllstandmessgerät mittels Radar, welches am Tank AK angebracht ist. Zur Messung der Durchflussgeschwindigkeit in der Rohrleitung AK' umfasst die Messstelle MS ein Feldgerät FG`, beispielsweise ein Durchflussmessgerät nach dem Coriolisprinzip, welches an der Rohrleitung AK' angebracht ist. Das Feldgerät FG` umfasst des Weiteren einen Temperatursensor zur Erfassung des die Rohrleitung AK' durchströmenden Mediums.

Jedes der Feldgeräte FG, FG` befindet sich mittels eines Kommunikationsmittels KM, beispielsweise ein Feldbus der Automatisierungstechnik, in Kommunikationsverbindung mit der Leitstelle LS der Anlage und überträgt die gemessenen Prozessvariablen der Messstelle MS an die Leitstelle LS.

Die gezeigte Messstelle MS befindet sich in einem Teilbereich eines verfahrenstechnischen Prozesses. In diesem Teilbereich des verfahrenstechnischen Prozesses wird ein Produkt PD vorbestimmter Quantität und Qualität aus zumindest einem Edukt ED vorbestimmter Quantität und Qualität erzeugt. Die Anlagenkomponenten AK, AK' sind derart ausgelegt, dass der Teilbereich des Prozesses in einem Arbeitspunkt betrieben wird, in welchem für das Erzeugen des Produktes PD in vorbestimmter Quantität und Qualität eine definierte Energiemenge aufgebracht wird.

Der Arbeitspunkt kann mittels den von den Feldgeräten FG, FG' erfassten Prozessvariablen kontrolliert werden. Sind diese Prozessvariablen, beispielsweise der Druck innerhalb des Tanks AK, die Strömungsgeschwindigkeit des Mediums in der Rohrleitung AK' und die Temperatur des Mediums in der Rohrleitung AK' konstant und entsprechen den Sollwerten, so wird der Teilbereich des Prozesses in dem festgelegten Arbeitspunkt unter der definierten Energiemenge betrieben.

Zum Überwachen des Arbeitspunkts werden die von den Feldgeräten FG, FG' erfassten Prozessvariablen an eine Serviceplattform SP übermittelt. Im vorliegenden Ausführungsbeispiel handelt es sich um eine cloudfähige Serviceplattform SP, welche über das Internet erreichbar ist. Die von den Feldgeräten FG erfassten Prozessvariablen werden entweder direkt von den Feldgeräten FG an die Serviceplattform SP übermittelt, oder aber von dem Leitstand LS der Anlage an die Serviceplattform SP weitergeleitet.

Auf der Serviceplattform SP ist eine Applikation ausführbar, welche zum Überwachen der Arbeitspunkte der in der Anlage ausgeführten verfahrenstechnischen Prozesse dient. Hierbei werden die von den Feldgeräten FG, FG' erfassten Prozessvariablen aufgezeichnet und über einen Zeitraum t mit Referenzwerten eines Referenzarbeitspunkts verglichen. Der Referenzarbeitspunkt wird beispielweise beim Inbetriebnehmen eines Prozesses, bzw. eines Teilbereichs eines Prozesses bestimmt, bzw. festgelegt.

Im in Fig. 1 gezeigten Beispiel zeigt sich eine Auffälligkeit in der Temperatur des Mediums, welche die Rohrleitung AK' durchströmt. Bei dem Medium handelt es sich beispielsweise um ein gasförmiges Medium, insbesondere um Dampf. Der Prozesswert T der Temperatur des Mediums steigt mit fortschreitender Zeit t an und entfernt sich von dem Referenzwert für die Temperatur. Dadurch verschiebt sich der Arbeitspunkt des Teilbereichs des Prozesses. Es ist eine erhöhte Energiemenge für das Erzeugen des Produktes PD in vorbestimmter Quantität und Qualität benötigt, da mehr Energie für das Erzeugen von heißerem Dampf verbraucht wird. Der wandernde Prozesswert T der Temperatur, bzw. der wandernde Arbeitspunkt stellt daher einen Indikator für den erhöhten Energiebedarf dar.

Überschreitet die Änderung des Arbeitspunktes, bzw. der Prozesswert T der Temperatur den Referenzarbeitspunkt um einen vorbestimmten Wert einer Abweichung Δ, so wird von der Serviceplattform SP eine Wartungsnotifikation WN erzeugt und an einen Benutzer übermittelt. Beispielsweise wird die Wartungsnotifikation WN an die Leitstelle LS der Anlage übermittelt.

Anhand der Wartungsnotifikation WN kann ein Auftrag an einen Servicetechniker erstellt werden, welcher anschließend den Teilbereich des Prozesses aufsucht und die Ursache für die Änderung des Arbeitspunktes behebt. Im vorliegenden Fall handelt es sich beispielsweise um eine Undichtigkeit in der Rohrleitung AK'. Mittels des erfindungsgemäßen Verfahrens ist somit der Wartungsbedarf von rein mechanischen Anlagenkomponenten AK, AK` ermittelbar.

Das erfindungsgemäße Verfahren ist nicht auf das in Fig. 1 gezeigte Ausführungsbeispiel beschränkt. Das Verfahren ist auf eine Vielzahl weiterer Anwendungen mit Feldgeräten FG` unterschiedlichen Typs, Anlagenkomponenten AK`, und Prozessen, bzw. Teilbereichen von Prozessen anwendbar.

### Bezugszeichenliste

- AK, AK': Anlagenkomponenten
- ED: Edukt
- FG, FG': Feldgeräte
- KM: Kommunikationsmittel
- LS: Leitstelle
- MS: Messstelle
- PD: Produkt
- SP: Serviceplattform
- T: Prozessvariable (Temperatur)
- t: Zeiteinheit
- WN: Wartungsnotifikation
- Δ: Abweichung gegenüber Referenz

## Patentansprüche

1. Verfahren zum Überwachen einer Messstelle (MS) in einer Anlage der Automatisierungstechnik, wobei die Messstelle (MS) zumindest an einer Anlagenkomponente (AK, AK`), insbesondere einem Behälter und/oder einer Rohrleitung, in welcher sich ein Prozessmedium zumindest zeitweise befindet, welche Anlagenkomponente (AK, AK`) ein einen verfahrenstechnisches Prozess eingebunden ist, angebracht ist, wobei die Messstelle (MS) zumindest ein Feldgerät (FG, FG'), welches zum Erfassen und/oder Beeinflussen von Prozessvariablen des Prozessmediums ausgestaltet ist, und zumindest ein Kommunikationsmittel (KM), welches zum Übertragen der von dem Feldgerät (FG, FG') erfassten Prozessvariablen an eine Leitstelle (LS) der Anlage ausgestaltet ist, umfasst, und wobei der Prozess auf einen definierten Referenzarbeitspunkt ausgelegt ist, wobei ein Arbeitspunkt das Erzeugen zumindest eines Produkts (PD) vorbestimmter Quantität und Qualität aus zumindest einem Edukt (ED) vorbestimmter Quantität und Qualität unter Aufwenden einer Energiemenge definiert, umfassend:
- Übertragen der von dem Feldgerät (FG, FG') erfassten Prozessvariablen an eine, insbesondere lokale oder webbasierte, Serviceplattform (SP);
- Speichern der Prozessvariablen in der Serviceplattform (SP);
- Vergleichen eines aktuellen Arbeitspunktes, an welchem der Prozess betrieben wird, mit dem Referenzarbeitspunkt auf Grundlage der gespeicherten Prozessvariablen (T), wobei der Referenzarbeitspunkt ein aktueller Arbeitspunkt eines weiteren Prozesses, bzw. eines weiteren Teilbereichs eines Prozesses darstellt, welcher Referenzarbeitspunkt kontinuierlich aktualisiert wird; und
- Erstellen und Übermitteln einer Wartungsnotifikation (WN) an einen Benutzer für den Fall, dass der aktuelle Arbeitspunkt des Prozesses eine Abweichung (Δ) gegenüber dem Referenzarbeitspunkt aufweist, welche Abweichung (Δ) größer gleich einem vorbestimmten Wert ist.

2. Verfahren nach Anspruch 1, wobei der Prozess in Teilbereiche unterteilt wird, wobei jeder der Teilbereiche zumindest eine Anlagekomponente (AK, AK`) und/oder ein Feldgerät (FG, FG') umfasst und wobei für jeden der Teilbereiche der aktuelle Arbeitspunkt, an welchem der jeweilige Teilbereich betrieben wird, mit einem Referenzarbeitspunkt verglichen wird, wobei der Referenzarbeitspunkt ein aktueller Arbeitspunkt eines weiteren Teilbereichs des Prozesses darstellt, welcher Referenzarbeitspunkt kontinuierlich aktualisiert wird.

3. Verfahren nach Anspruch 2, wobei im Falle, dass der aktuelle Arbeitspunkt von einem der Teilbereiche eine Abweichung (Δ) gegenüber dem jeweiligen Referenzarbeitspunkt aufweist, welche Abweichung (Δ) größer gleich einen vorbestimmten Wert, ist eine den Teilbereich betreffende Wartungsnotifikation (WN) erstellt und übermittelt wird.

4. Verfahren nach zumindest einem der vorherigen Ansprüche, wobei die von dem Feldgerät (FG, FG') erfassten Prozessvariablen (T) indirekt über die Leitstelle (LS) an die Serviceplattform (SP) übermittelt werden, oder wobei die von dem Feldgerät (FG, FG') erfassten Prozessvariablen (T) direkt, insbesondere über ein lokales Netzwerk und/oder eine Internetverbindung, von dem Feldgerät (FG, FG') an die Serviceplattform (SP) übermittelt wird.

5. Verfahren nach zumindest Anspruch 2, wobei zum Vergleichen des aktuellen Arbeitspunktes des Prozesses, bzw. des Teilbereichs, mit dem jeweiligen Referenzarbeitspunkt gespeicherte Prozessvariablen (T) von Feldgeräten (FG, FG`), welche in Messstellen (MS) enthalten sind, welche sich örtlich in der Nähe der Messstelle (MS) befinden, verwendet werden.

## Claims

1. A method for monitoring a measuring point (MS) in an automation system, wherein the measuring point (MS) is attached to at least one system component (AK, AK'), in particular a container and/or a pipeline, in which a process medium is at least temporarily located, said system component (AK, AK') being incorporated into a technical process, wherein the measuring point (MS) comprises at least one field device (FG, FG'), which is adapted to detect and/or influence process variables of the process medium, and at least one communication means (KM), which is adapted to transmit the process variables detected by the field device (FG, FG') to a control center (LS) of the system, and wherein the process is adapted to a defined reference working point, wherein a working point defines the production of at least one product (PD) of predetermined quantity and quality from at least one reactant (ED) of predetermined quantity and quality using a quantity of energy, comprising:
- Transmitting the process variables detected by the field device (FG, FG') to a service platform (SP), in particular a local or web-based service platform;
- Storing the process variables in the service platform (SP);
- Comparing a current working point at which the process is being operated with the reference working point on the basis of the stored process variables (T), wherein the reference working point represents a current working point of a further process or of a further sub-area of a process, which reference working point is continually updated; and
- Generating and transmitting a maintenance notification (WN) to a user in the event that the current working point of the process exhibits a deviation (Δ) from the reference working point, which deviation (Δ) is greater than or equal to a predetermined value.

2. The method as claimed in claim 1, wherein the process is subdivided into sub-areas, wherein each of the sub-areas comprises at least one system component (AK, AK') and/or one field device (FG, FG') and wherein, for each of the sub-areas, the current working point at which the respective sub-area is being operated is compared with a reference working point, wherein the reference working point represents a current working point of a further sub-area of the process, which reference working point is continually updated.

3. The method as claimed in claim 2, wherein, if the current working point of one of the sub-areas exhibits a deviation (Δ) from the respective reference working point, which deviation (Δ) is greater than or equal to a predetermined value, a maintenance notification (WN) relating to the sub-area is produced and transmitted.

4. The method as claimed in at least one of the preceding claims, wherein the process variables (T) detected by the field device (FG, FG') are transmitted to the service platform (SP) indirectly via the control center (LS), or wherein the process variables (T) detected by the field device (FG, FG') are transmitted from the field device (FG, FG') to the service platform (SP) directly, in particular via a local network and/or an Internet connection.

5. The method as claimed in at least claim 2, wherein stored process variables (T) of field devices (FG, FG'), which are contained in measuring points (MS) that are located spatially near the measuring point (MS), are used to compare the current working point of the process or of the sub-area with the respective reference working point.

## Revendications

1. Procédé destiné à la surveillance d'un point de mesure (MS) dans une installation de la technique d'automatisation, le point de mesure (MS) étant monté au moins sur un composant d'installation (AK, AK'), notamment un réservoir et/ou une conduite, dans lequel/laquelle se trouve au moins temporairement un produit de process, lequel composant d'installation (AK, AK') est intégré dans un process de la technique des procédés, le point de mesure (MS) comprenant au moins un appareil de terrain (FG, FG'), lequel est conçu pour saisir et/ou influencer des variables de process du produit de process, et au moins un moyen de communication (KM), lequel est conçu pour transmettre les variables de process saisies par l'appareil de terrain (FG, FG') à un poste de commande (LS) de l'installation, lequel process est conçu pour un point de travail de référence défini, un point de travail définissant la génération d'au moins un produit (PD) de quantité et de qualité prédéfinies à partir d'au moins un éduit (ED) de quantité et de qualité prédéfinies en utilisant une quantité d'énergie, lequel procédé comprend les étapes suivantes :
- Transmission des variables de process saisies par l'appareil de terrain (FG, FG') à une plateforme de service (SP), notamment locale ou basée sur le web ;
- Enregistrement des variables de process dans la plateforme de service (SP) ;
- Comparaison d'un point de travail actuel, auquel le process est exploité, avec le point de travail de référence sur la base des variables de process (T) enregistrées, le point de travail de référence représentant un point de travail actuel d'un autre process, ou d'une autre zone partielle d'un process, lequel point de travail de référence est actualisé en continu ; et
- Génération et transmission d'une notification de maintenance (WN) à un utilisateur dans le cas où le point de travail actuel du process présente un écart (Δ) par rapport au point de travail de référence, lequel écart (Δ) est supérieur ou égal à une valeur prédéfinie.

2. Procédé selon la revendication 1,
pour lequel le process est divisé en zones partielles, chacune des zones partielles comprenant au moins un composant d'installation (AK, AK') et/ou un appareil de terrain (FG, FG') et
pour lequel, pour chacune des zones partielles, le point de travail actuel auquel la zone partielle respective est utilisée est comparé à un point de travail de référence, le point de travail de référence représentant un point de travail actuel d'une autre zone partielle du process, lequel point de travail de référence est actualisé en continu.

3. Procédé selon la revendication 2, pour lequel, dans le cas où le point de travail actuel de l'une des zones partielles présente un écart (Δ) par rapport au point de travail de référence respectif, lequel écart (Δ) est supérieur ou égal à une valeur prédéfinie, une notification de maintenance (WN) concernant la zone partielle est générée et transmise.

4. Procédé selon l'une des revendications précédentes,
pour lequel les variables de process (T) saisies par l'appareil de terrain (FG, FG') sont transmises indirectement à la plateforme de service (SP) par l'intermédiaire du poste de commande (LS), ou
pour lequel les variables de process (T) saisies par l'appareil de terrain (FG, FG') sont transmises directement, notamment par l'intermédiaire d'un réseau local et/ou d'une connexion Internet, par l'appareil de terrain (FG, FG') à la plateforme de service (SP).

5. Procédé selon au moins la revendication 2, pour lequel, pour comparer le point de travail actuel du process ou de la zone partielle, avec le point de travail de référence respectif, on utilise des variables de process (T) enregistrées d'appareils de terrain (FG, FG'), lesquelles variables sont contenues dans des points de mesure (MS) se trouvant localement à proximité du point de mesure (MS).
